# EUROPÄISCHE PATENTSCHRIFT

(11) **EP 3 951 203 B1**
(45) Veröffentlichungstag und Bekanntmachung des Hinweises auf die Patenterteilung: **15.11.2023**
(21) Anmeldenummer: 20189330.2
(22) Anmeldetag: 04.08.2020
(51) Int. Cl.: F16D 7/02

(54) **ÜBERLASTKUPPLUNG**
OVERLOAD CLUTCH
ACCOUPLEMENT DE SURCHARGE

(43) Veröffentlichungstag der Anmeldung: 09.02.2022
(73) Patentinhaber: Centa-Antriebe Kirschey GmbH, 42781 Haan (DE)
(72) Erfinder: UGBEKILE, Monday, 42781 Haan (DE)
(74) Vertreter: V.O.

(56) Entgegenhaltungen:
- EP-A1- 2 075 466
- FR-A- 1 018 988
- US-A- 3 831 401
- US-A- 3 984 999

## Beschreibung

Vorliegende Erfindung betrifft eine Überlastkupplung, beispielsweise Rutschkupplung, zur Übertragung eines in der Höhe begrenzten, um eine Drehmomentenachse A_{M} wirkenden Drehmoments M, von einem Antriebsteil, beispielsweise einem Getriebe einer Antriebswelle einer Windkraftanlage, auf ein insbesondere axial nachgeschaltetes Abtriebsteil, beispielsweise einen Antriebsstrang eines Generators, umfassend: wenigstens einen drehmomentsteif entweder mit dem Antriebsteil oder dem Abtriebsteil verbundenen ersten Körper, und wenigstens einen entsprechend drehmomentsteif mit dem anderen Teil, also dem Abtriebsteil bzw. dem Antriebsteil verbundenen zweiten Körper, wobei der zweite Körper eine Mehrzahl an Reibelementen umfasst, die, unter Bildung eines Reibschlusses zwischen dem erstem Körper und dem zweiten Körper, gegen Reibgegenelemente am ersten Körper entlang einer Vorspannachse A_{V} vorgespannt sind, die Reibelemente entlang der Vorspannachse A_{V} beweglich, insbesondere verschieblich, in Reibelementaufnahmen im zweiten Körper gelagert sind, wobei die Reibelemente entlang der Vorspannachse Av beweglich in Reibelementaufnahmen im zweiten Körper gelagert, aufgrund der Vorspannung von den Reibgegenelementen eingeklemmt, und bis zum Erreichen des Überlastmomentes entlang wenigstens einer Achse in ihrer Lage fixiert sind.

Derartige Kupplungen sind aus dem Stand der Technik bekannt. Sie sind meist als Rutschkupplungen ausgebildet und dienen der Überlastsicherung beispielsweise eines Getriebes gegen Lastspitzen, die u.a. vom Generator einer Windkraftanlage induziert werden können. So kann es insbesondere durch Rückkoppelungen aus dem Elektrizitätswerk mitunter zu unzulässigen Drehmomentensteigerungen kommen. In einem solchen Fall spricht die Überlastkupplung an, wobei der Überlastanteil der Drehmomentenspitze durch das aneinander Abgleiten von Reibbelägen der Rutschkupplung bzw. Überlastkupplung aufgefangen wird. Ein gewisses Restdrehmoment wird weiterhin übertragen. Insofern sind die hier thematisierte Rutschkupplungen u.a. lasthaltende, jedoch überlastabwerfende Kupplungen. Aufgrund obiger Konstruktionen ist es möglich, beispielsweise das Getriebe der Windkraftanlage vor Überlast zu schützen.

Die FR 1 9018 988 A zeigt eine Überlastkupplung zur Verbindung eines Antriebsstrangs mit einem Abtriebsstrang, bei der radial zueinander versetzt angeordnete Hülsen, längsverschieblich in Nuten gelagerte Reibelemente in Form von Reibscheiben aufweisen. Die in den Nuten gelagerten Reibscheiben einer jeden Hülse, sind relativ zueinander bewegbar. Die Reibscheiben sind so angeordnet, dass sie den Antriebs- bzw. Abtriebsstrang vollständig umgeben.

Die US 3 831 401 A zeigt eine Überlastkupplung, bei der Reibschluss zwischen Antriebteil und Abtriebsteil über eine Keilelementanordnung erfolgt, die zwischen einer Hülse, verbunden mit dem Abtriebsteil, und einem Schaft bzw. einer Antriebswelle angeordnet ist.

Die US 3 984 999 A zeigt eine Überlastkupplung, bei der ein Reibschluss über eine Reibscheibe erreicht wird, die den Antriebs- bzw. Abtriebsstrang vollumfänglich umgibt.

Problematisch an solchen Überlastkupplungen ist jedoch die meist sehr komplexe Bauweise, insbesondere im Zusammenhang mit den hohen abzutragenden Lasten. Da das Abtragen von Überlastspitzen nur vereinzelt auftritt, besteht der Bedarf, eine solche Überlastkupplung möglichst preiswert und leicht montierbar auszubilden.

Diese Aufgabe wird durch eine Überlastkupplung gern, dem unabhängigen Anspruch gelöst.

Insbesondere wird diese Aufgabe gelöst durch eine Überlastkupplung, beispielsweise Rutschkupplung, zur Übertragung eines in der Höhe begrenzten, um eine Drehmomentenachse A_{M} wirkenden Drehmoments M, von einem Antriebsteil, beispielsweise einem Getriebe einer Antriebswelle einer Windkraftanlage, auf ein insbesondere axial nachgeschaltetes Abtriebsteil, beispielsweise einen Antriebsstrang eines Generators, umfassend: wenigstens einen drehmomentsteif entweder mit dem Antriebsteil oder dem Abtriebsteil verbundenen ersten Körper, und wenigstens einen entsprechend drehmomentsteif mit dem anderen Teil, also dem Abtriebsteil bzw. dem Antriebsteil verbundenen zweiten Körper, wobei der zweite Körper eine Mehrzahl an Reibelementen umfasst, die, unter Bildung eines Reibschlusses zwischen dem erstem Körper und dem zweiten Körper, gegen Reibgegenelemente am ersten Körper entlang einer Vorspannachse Av vorgespannt sind, die Reibelemente entlang der Vorspannachse Av beweglich, insbesondere verschieblich, in Reibelementaufnahmen im zweiten Körper gelagert sind, und wobei die Reibelemente entlang der Vorspannachse Av beweglich, insbesondere verschieblich, in Reibelementaufnahmen im zweiten Körper gelagert sind.

Ein Punkt der Erfindung ist die Ausbildung einer Überlastkupplung mit axial beweglich und insbesondere verschieblich gelagerten Reibelementen, die mit komplementären Reibgegenelementen an den jeweiligen zu verbindenden Körpern bzw. Antriebs- bzw. Abtriebsteilen eine Reibschlussverbindung derart herstellen, dass das geforderte Drehmoment vom Antriebsteil auf den Antriebsteil übertragbar ist. Lastspitzen werden durch die Definition einer maximal übertragbaren Reibkraft zuverlässig abgetragen, wobei das Solldrehmoment weiterhin übertragbar bleibt. Die zu übertragenden Drehmomente sind dabei u.a. direkt von der aufgebrachten Vorspannkraft zwischen den Reibelementen und den Reibgegenelementen abhängig.

Relevant ist, dass aufgrund der axial verschieblichen Ausbildung der Reibelemente optional keine Vorspannung vom ersten auf den zweiten Körper, in dem die Reibelemente gelagert sind, wirkt. Aufgrund der Verschieblichkeit der Reibelemente relativ zum zweiten Körper, ist es denkbar, dass der zweite Körper insbesondere axial zum ersten Körper verschiebbar bleibt, wodurch unter anderem Axialtoleranzen ausgleichbar bleiben. Darüber hinaus werden axial wirkende Unstetigkeiten im Kraftübertragungsbetrieb kompensiert.

Erfindungsgemäß wird die Reibschlusskraft also zwischen den axial verschieblich im zweiten Körper gelagerten Reibelementen und den insbesondere ortsfest am ersten Körper gelagerten bzw. ausgebildeten Reibgegenelementen übertragen. Die Bezeichnung "oder umgekehrt" bedeutet im Umfang der Erfindung, dass die genannten Bauteile auch an dem anderen Körper der in dem jeweiligen Zusammenhang genannten Anordnung ausgebildet sein kann. So können beispielsweise die Reibelemente auch am ersten Körper und die Reibgegenelemente am zweiten Körper ausgebildet werden.

Reibgegenelemente können jede Art von Elementen sein, die unter Vorspannung mit den Reibelementen einen Kraftschluss bilden können. Optional sind die Reibgegenelemente bei einer solchen Überlastkupplung Beschichtungen, integral mit dem jeweiligen Körper ausgebildete Flächen, Körper oder dergleichen Bereiche, separat ausgebildet Elemente und insbesondere Inlays. Es ist beispielsweise denkbar, ein Reibgegenelement als Teil der Oberfläche des ersten bzw. zweiten Körpers auszubilden, ohne es explizit zu beschichten und/oder zu behandeln und/oder dergleichen zu verarbeiten, solange es einen definierten Reibschluss mit dem anstehenden Reibelement ermöglicht.

Optional verläuft die Vorspannachse Av im Wesentlichen parallel zur Drehmomentenachse A_{M}. Es ist denkbar, unterschiedliche Vorspannachsen bei unterschiedlichen Reibelementen vorzusehen. Vorspannachsen und Drehmomentachsen können koaxial verlaufen, es ist aber auch denkbar, die einzelnen Vorspannachsen der einzelnen Reibelemente abweichend zueinander und/oder zur Drehmomentachse anzuordnen. Optional sind eine Mehrzahl an Reibelementen insbesondere nebeneinander angeordnet und insbesondere symmetrisch um die Drehmomentenachse angeordnet. Optional liegen sie auf wenigstens einer Kreisbahn um die Drehmomentachse. Optional sind sie mit gleichem Abstand relativ zueinander und/oder zur Drehmomentachse angeordnet. Optional sind die Reibelemente derart angeordnet, dass ihr gemeinsamer Schwerpunkt auf der Drehmomentenachse liegt.

Erneut sei erwähnt, dass Reibelementaufnahmen am ersten Körper und/oder am zweiten Körper ausgebildet sein können. Insofern gilt alles hier Gesagte sowohl für die eine als auch für die andere Anordnung.

Optional ist wenigstens ein Reibelement entlang der Vorspannachse Av zwängungsfrei in den Reibelementaufnahmen gelagert. Insbesondere in diesem Zusammenhang ist es denkbar, dass die Reibelemente um die Vorspannachse Av drehbar in den Reibelementaufnahmen gelagert sind. Ein Vorteil einer solchen Ausführung ist sehr einfache Montage der Reibelemente in den Reibelementaufnahmen. Darüber hinaus garantiert die zwängungsfreie Lagerung bzw. auch die drehbare Lagerung eine gleichmäßige Abnutzung der Reibelemente. Darüber hinaus werden Toleranzen zwischen erstem und zweitem Körper bzw. Toleranzen in den Reibelementen zuverlässig beseitigt. Es ist denkbar, dass die Reibelemente so in den Reibelementaufnahmen anordbar sind, dass sie ohne Fremdeinwirkung, beispielsweise eine extern aufgebrachte Druckkraft (und insbesondere einer Kraft außer der Schwerkraft) nicht aus den Reibelementaufnahmen herausfallen. Dies ist optional insbesondere in einem Voreinbauzustand der Fall, in dem die Reibelement noch nicht unter Vorspannung stehen.

Erfindungsgemäß sind der erste Körper und der zweite Körper derart ausgebildet, dass aufgrund der Vorspannung, die Reibelemente am einen Körper bzw. gelagert in den Reibelementaufnahmen des einen Körpers, von den Reibgegenelementen am anderen Körper eingeklemmt und bis zum Erreichen des Überlastmoments entlang wenigstens einer Achse in ihrer Lage fixiert werden. Die Lagerung ist optional so ausgebildet, dass bei Erreichen des Überlastmoments eine Lagekompensation zwischen ersten Körper und zweiten Körper erfolgen kann. Aufgrund der Vorspannung bleibt optional die resultierende Vorspannkraft gleich. Selbiges gilt für das zu übertragende Drehmoment. Optional werden lediglich Lastspitzen, die über dieses Drehmoment hinausgehen Durch das Durchrutschen der Reibelemente relativ zu ihren Reibgegenelementen eliminiert.

Optional sind die Reibelementaufnahmen derart ausgebildet, dass sie eine Axialführung für die Reibelemente bilden. Weiter optional sind sie derart ausgebildet, dass sie eine Kraftübertragung in einer von dieser Achse und insbesondere der Vorspannachse abweichende Richtung erlauben. So werden Drehmomente, die über den Reibschluss in die Reibelemente eingetragen werden, über die Reibelementaufnahmen an den jeweiligen Körper weitergeleitet. Insbesondere erfolgt die Drehmomentübertragung über eine Querkraftbelastung und/oder Biegemomentbelastung der Reibelemente quer zur Vorspannachse

Optional weist der zweite Körper einen Innenkörper und der erste Körper einen Außenkörper auf, oder umgekehrt, wobei der Außenkörper den Innenkörper wenigstens teilweise umschließt. Optional ist der zweite Körper als Innenkörper und der erste Körper als Außenkörper ausgebildet, oder umgekehrt, wobei der Außenkörper den Innenkörper wenigstens teilweise umschließt. Insbesondere ist es denkbar, dass der erste Körper einen Sattel umfasst, und/oder der zweite Körper eine Reibscheibe umfasst, wobei optional die Reibscheibe eine Mehrzahl an Reibelementaufnahmen aufweist, in der die Reibelemente entlang der Vorspannachse Av verschiebbar gelagert sind. Optional ist es insbesondere in diesem Zusammenhang denkbar, dass der Außenkörper die Reibgegenelemente umfasst und die Reibelemente am Innenkörper unter Bildung des Reibschlusses druckbeaufschlagt. Optional ist der Außenkörper als der Sattel ausgebildet und/oder der Innenkörper als die Reibscheibe. Es ist natürlich denkbar, eine Mehrzahl an Außenkörpern und/oder Innenkörpern vorzusehen.

Es ist denkbar, den Außenkörper mehrteilig auszubilden und die einzelnen Teile, beispielsweise Teilkörper des Außenkörpers, relativ zueinander unter Pressung der Reibelemente gegeneinander vorzuspannen. Diese Vorspannkraft bewirkt den Reibschluss zwischen Reibelementen und den Teilkörpern des Außenköpers bzw. daran ausgebildeten Reibgegenelementen.

Optional weist der erste Körper wenigstens zwei erste Teilkörper, insbesondere erste Ringelemente, und der zweite Körper wenigstens einen zweiten Teilkörper, insbesondere ein zweites Ringelement, auf, oder umgekehrt, welche insbesondere entlang der Vorspannachse Av abwechselnd geschichtet angeordnet sind. Auf diese Weise kann eine Vorspannung beispielsweise zwischen zwei ersten Teilkörpern und dem dazwischen gelagerten ersten Teilkörper, umfassend die Reibelemente, aufgebracht werden. Erfindungsgemäß ist es möglich, den zweiten Körper nicht unter Vorspannung zum ersten Teilkörper zu bringen, sondern nur die Reibelemente, die im zweiten Körper gelagert sind. Es ist optional denkbar, den zweiten Körper relativ zum ersten Körper entlang der Vorspannachse axial verschiebbar auszubilden. Es ist denkbar, den ersten und zweiten Teilkörper so auszubilden, dass sie in Form einer Mehrzahl an insbesondere orthogonal zur Vorspannachse ausgebildeten, optional parallel zueinander verlaufenden, und insbesondere geschichteten Scheibenebenen angeordnet sind.

Optional ist der Antriebsteil oder der Abtriebsteil mit einem der wenigstens zwei ersten Teilkörper verbunden und der andere Teil, also der Abtriebsteil bzw. der Antriebsteil, mit dem zweiten Teilkörper verbunden. Eine solche Verbindung kann drehsteif ausgebildet sein. Eine solche Verbindung kann axialsteif ausgebildet sein. Eine solche Verbindung kann stoffschlüssig, beispielsweise eine Schweißbolzen- oder dergleichen feste Verbindung, sein. Insbesondere weist der Antriebsteil und/oder der Abtriebsteil an dem jeweiligen Teilkörper eine Flanschverbindung und insbesondere eine lösbare Flanschverbindung, beispielsweise mittels einer Bolzenverbindung, Schraubverbindung oder dergleichen Verbindung verbundene Verbindung, auf. Optional ist der Antriebsteil und/oder der Abtriebsteil lösbar mit dem jeweiligen Teilkörper verbunden. Optional sind die Teilkörper lösbar miteinander verbunden.

Optional ist, in Bezug auf die Drehmomentenachse, ein Verbindungsbereich zwischen dem Abtriebsteil oder dem Antriebsteil und dem zweiten Körper radial innerhalb oder außerhalb eines Verbindungsbereichs des ersten Körpers mit dem entsprechenden anderen Teil, nämlich dem Antriebsteil bzw. Abtriebsteil, angeordnet. Optional sind am ersten Körper und am zweiten Körper ausgebildete Verbindungsbereiche und insbesondere Anschlussbereiche radial zueinander versetzt angeordnet und insbesondere, in Bezug auf die Drehmomentenachse, radial zueinander versetzt. Anschlussbereiche dienen hier dem Anschluss des jeweiligen Körpers an den Abtriebsteil bzw. Antriebsteil. Wie bereits erwähnt, können Anschlussbereiche Flanschbereiche, Flanschaufnahmen, vorstehende Anschlusselemente, Anschlussaufnahmen, Kopplungs- oder dergleichen Verbindungsmittel sein, um den jeweiligen Körper am Antriebsteil bzw. Abtriebsteil anzuschließen und insbesondere lösbar anzuschließen.

Optional sind der erste Körper und der zweite Körper derart ausgebildet, dass im Vorspannzustand wenigstens ein Teilkörper des einen Körpers, in dem die Reibelementaufnahmen ausgebildet sind, relativ zum anderen Körper beweglich und insbesondere wenigstens entlang der Vorspannachse Av verschiebbar ausgebildet. Auf diese Weise lassen sich Bauteiltoleranzen leicht ausgleichen.

Optional ist wenigstens ein Vorspannmittel vorgesehen, das wenigstens zwei Teilkörper des ersten Körpers, unter Vorspannung und insbesondere Pressung wenigstens eines Reibelements am zweiten Körper, oder umgekehrt, gegeneinander vorspannt. Optional ist wenigstens ein Vorspannmittel vorgesehen, das zur Bildung des Reibschlusses zwischen dem erstem Körper und dem zweiten Körper, die Reibelemente am zweiten Körper entlang der wenigstens einen Vorspannachse Av gegen Reibgegenelemente am ersten Körper vorgespannt und insbesondere presst. Optional ist die Vorspannung eine Federvorspannung, aufgebracht durch wenigstens ein Vorspannmittel, insbesondere ein elastisches Schrauben- oder dergleichen Verbindungsmittel. Insbesondere kann das Vorspannmittel wenigstens zwei Teile eines Körpers relativ zueinander vorgespannt verbinden. Es ist denkbar, dass das Vorspannmittel wenigstens zwei Teilkörper des einen Körpers unter Pressung wenigstens eines Reibelements am anderen Körper gegeneinander vorspannt. Es ist denkbar, dass durch das wenigstens eine optional elastische Vorspannmittel eine Reibschlusskraft zwischen dem wenigstens einen Reibelement und dem jeweiligen Reibgegenelement aufgebracht wird.

In einer besonderen Ausführungsform umgeben die zwei Teilkörper des einen Körpers, beispielsweise des ersten Körpers, wenigstens einen Teilkörper des anderen Körpers, insbesondere des zweiten Körpers, wobei sie Reibelemente, die in den Reibelementaufnahmen dieses Körpers angeordnet sind, zusammendrücken. Diese Pressung resultiert in einem Reibschluss zwischen den Reibelementen und den gegen diese Reibelemente vorgespannten Teilkörpern.

Optional weist wenigstens ein Reibelement einen Reibzylinder oder ein dergleichen um eine Rotationsachse rotationssymmetrisch ausgebildeten Reibkörper auf. Es ist denkbar, das Reibelement grundsätzlich als Volumenelement und insbesondere als ein Element mit wenigstens zwei Stirnseitenflächen auszubilden, wobei diese Stirnseitenflächen mit den Reibgegenelementen in Reibschluss stehen. Optional sind die Stirnseitenflächen parallel zueinander und insbesondere auf zwei gegenüberliegenden Seiten des Reibelements ausgebildet. Insbesondere wenn das Reibelement als ein Reibzylinder oder ein dergleichen um eine Rotationsachse rotationssymmetrisch ausgebildeter Reibkörper ausgebildet ist, bilden die Stirnseitenflächen optional die Ober- und Unterseite des Reibelements. Die Rotationsachse verläuft optional parallel zur Vorspannachse, entlang derer das Reibelement beweglich in der Reibelementaufnahme gelagert ist.

Erfindungsgemäß weist der zweite Körper eine Mehrzahl an Reibelementaufnahmen auf, die den Körper entlang einer Durchdringungsachse durchdringen, wobei die Reibelemente entlang dieser Durchdringungsachse beweglich und insbesondere verschiebbar in den Reibelementaufnahmen gelagert sind. Optional sind die Reibelementaufnahmen als Bohrungen durchgeführt, die den Körper, der die Reibelementaufnahmen aufweist, im Wesentlichen vollständig durchdringen. Die Reibelemente sind optional derart angeordnet, dass sie den Körper von der einen Seite zur anderen Seite durchdringen und beidseitig aus diesem Körper hervorstehen und so in Kontakt mit dem anderen Körper gebracht werden können. Es ist beispielsweise möglich, den einen Körper und insbesondere den zweiten Körper als Scheibenelement und insbesondere Reibscheibe auszubilden, in dem eine Mehrzahl an Reibelementaufnahmen in Form von Bohrungen oder dergleichen die Reibscheibe durchdringenden Aufnahmen ausgebildet sind, in die die Reibelemente derart eingesetzt sind, dass sie beidseitig aus dieser Scheibe hervorstehen.

Optional sind die Reibelemente werkzeuglos in die jeweiligen Reibelementaufnahmen einsetzbar und insbesondere austauschbar, wenn der zweite Körper nicht am ersten Körper verbaut ist. Eine Fixierung der Reibelemente in den Reibelementaufnahmen erfolgt optional dann, sobald der zweite Körper am ersten Körper verbaut ist. Insbesondere ist es denkbar, dass die Reibelemente durch den ersten Körper in den Reibelementaufnahmen am zweiten Körper, oder umgekehrt, gehalten werden.

Weitere Ausführungen der Erfindung ergeben sich aus den Unteransprüchen.

Im Folgenden wird die Erfindung anhand von Ausführungsbeispielen beschrieben, die durch die beiliegenden Zeichnungen näher erläutert werden. Hierbei zeigen schematisch:
- Fig. 1: eine schematische Seiten-Darstellung einer Ausführungsform der erfindungsgemäßen Überlastkupplung;
- Fig. 2: eine isometrische Teildarstellung einer weiteren Ausführungsform der erfindungsgemäßen Überlastkupplung;
- Fig. 3: eine isometrische Detaildarstellung der Ausführungsform gern. Fig. 2;
- Figs. 4 und 5: weitere schematische Detaildarstellungen der Ausführungsform gern. Fig. 2;
- Fig. 6: eine Vorderansicht einer weiteren Ausführungsform der erfindungsgemäßen Überlastkupplung,
- Fig. 7: zwei isometrische Darstellungen der Ausführungsform gern. Fig. 6;
- Fig. 8: einen Querschnitt durch die Ausführungsform gern. Fig. 6; und
- Figs. 9 und 10: Detaildarstellungen der Ausführungsform gern. Fig. 6, wie in Fig. 8 bezeichnet.

Im Folgenden werden für gleiche und gleich wirkende Bauteile dieselben Bezugsziffern verwendet, wobei zur Unterscheidung bisweilen Hochindizes ihre Anwendung finden.

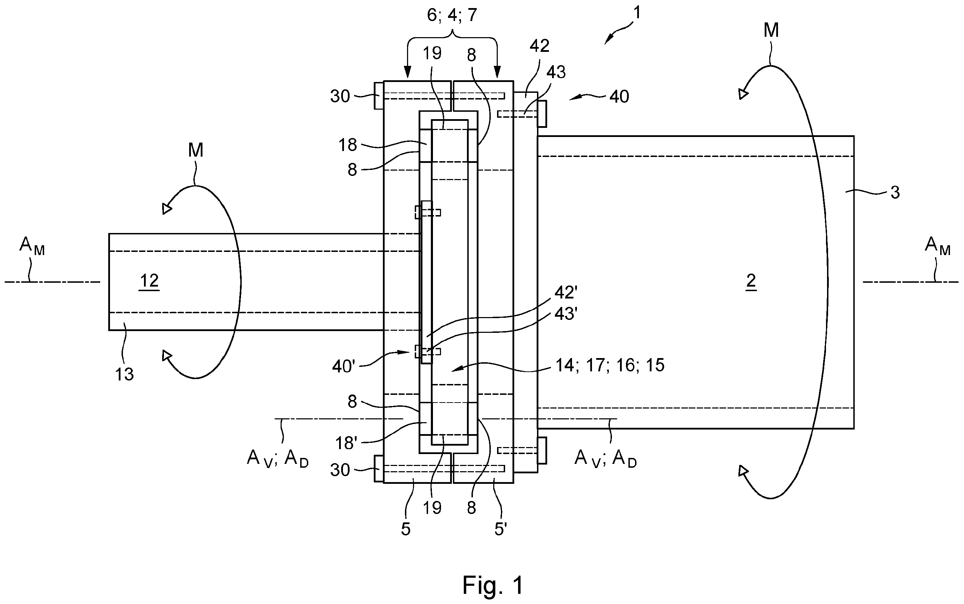

Die Figs. 1 und 2-5 zeigen zwei Ausführungsformen der erfindungsgemäßen Überlastkupplung. Die Überlastkupplung 1 ist hier jeweils als Rutschkupplung ausgeführt und zur Übertragung eines um eine Drehmomentenachse A_{M} wirkenden Drehmoments M, von einem Antriebsteil 2, beispielsweise einem Getriebe einer Antriebswelle 3 einer Windkraftanlage, auf ein insbesondere axial nachgeschaltetes Abtriebsteil 12, beispielsweise einem Antriebsstrang 13 eines Generators ausgeblegt. Um bspw. ein generatorseitiges Rückschlagen eines Drehmoments auf die Antriebswelle 3 zu vermeiden überträgt die Rutschkupplung bzw. Überlastkupplung 1 nur ein in der Höhe begrenztes Drehmoment. Die Überlastkupplung umfasst einen ersten Körper 4 und einen zweiten Körper 14, die miteinander durch Reibschluss verbunden sind und die Drehmomentenübertragung zwischen dem Antriebsteil 2 und dem Abtriebsteil 12 erlauben.

Es sei darauf hingewiesen, dass im Umfang dieser Offenbarung, alles das was für den ersten Körper 2 gesagt wird alternativ oder identisch auch für den zweiten Körper 12 gelten kann, oder umgekehrt.

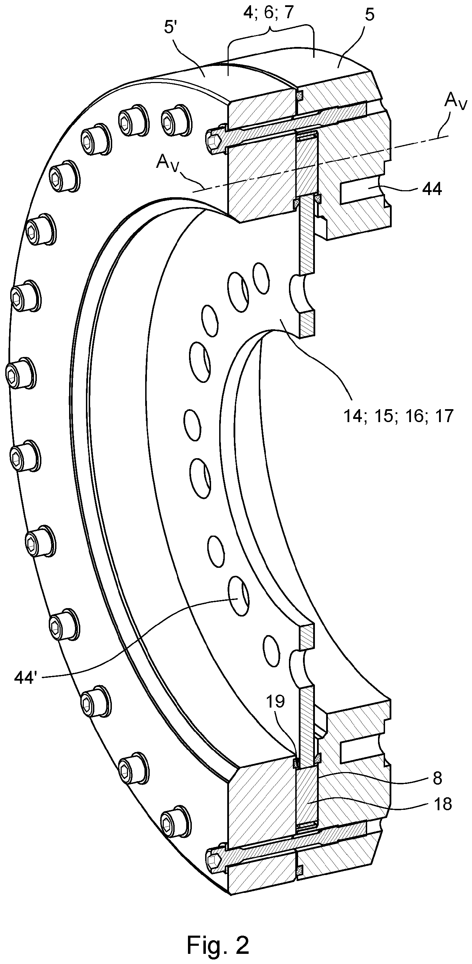

Bei der hier dargestellten Ausführungsform ist der erste Körper 4 mit dem Antriebsteil 2 verbunden, während der zweite Körper 14 mit dem Abtriebsteil 12 verbunden ist. Die Verbindung ist dabei beispielsweise über eine Flanschverbindung oder jede andere Art von insbesondere lösbarer Verbindung 40 hergestellt, wie in Fig. 1 dargestellt ist. Eine solche Verbindung 40 kann beispielsweise, wie hier dargestellt, eine Flanschverbindung sein, umfassend einen Flansch 42, der mit dem Antriebsteil 2 oder mit dem Abtriebsteil 12 verbunden ist. Bei dieser Ausführungsform weisen beide Teile 2, 12 entsprechende Flanschverbindungen auf, es können natürlich jegliche andere Art von Verbindungen zwischen Antriebs- bzw. Abtriebsteil und den jeweiligen ersten und zweiten Teilen 4, 14 der Überlastkupplung vorgesehen sein. Bei dieser Ausführungsform 4 ist der jeweilige Flansch 42 formschlüssig mit dem Abtriebsteil 12 bzw. Antriebsteil 2 verbunden, und kann über Bolzenverbindungen 43 mit dem jeweiligen ersten Körper 4 bzw. zweiten Körper 14 der Überlastkupplung lösbar verbunden werden. Wie insbesondere bei den Ausführungsformen gern. Figs. 2-5 dargestellt, sind entsprechende Bolzenaufnahmen 44 bzw. Bolzendurchdringungen 44 an den jeweiligen Körpern 4 bzw. 14 vorgesehen, um die Bolzen 43 (siehe Fig. 1) aufzunehmen. Die Verbindung zwischen Antriebsteil bzw. Abtriebsteil und dem jeweiligen Körper 4, 14 ist hier drehmomentensteif ausgebildet, um so das Drehmoment vom Antriebsteil über die Überlastkupplung an das Abtriebsteil zu übertragen.

Bei dieser Ausführungsform weist der zweite Körper 14 eine Mehrzahl an Reibelementen 18 auf, die in Reibelementaufnahmen 19 am zweiten Körper 14 gelagert sind, und, unter Bildung eines Reibschlusses zwischen dem ersten Körper 4 und dem zweiten Körper 14, das Drehmoment M übertragen. Die Reibelemente 18, gelagert am zweiten Körper 14, stehen dabei mit Reibgegenelementen 8 am ersten Körper 4 in Kraftkopplung. Die Reibelemente sind, unter Bildung des Reibschlusses zwischen dem erstem Körper 4 und dem zweiten Körper 14, gegen Reibgegenelemente 8 am ersten Körper 4 entlang einer Vorspannachse A_{V} vorgespannt, und bei dieser Ausführungsform druckbeaufschlagt gegen die Reibgegenelemente 8 verklemmt. Die Reibelemente 18 sind entlang der jeweiligen Vorspannachse Av beweglich und insbesondere verschieblich in den Reibelementaufnahmen 19 im zweiten Körper 14 gelagert.

Erkennbar ist weiter, dass bei dieser Ausführungsform der zweite Körper 14 optional einen Innenkörper 17 und der erste Körper 4 optional einen Außenkörper 7 aufweist. Umgekehrt ist dies natürlich ebenfalls möglich. Der Außenkörper 7 umschließt bei dieser Ausführungsform den Innenkörper 17 wenigstens teilweise. Insbesondere umfasst optional der erste Körper 4 einen Sattel 6 und/oder der zweite Körper 14 eine Reibscheibe 16. Der zweite Körper und insbesondere die Reibscheibe 16 kann eine Mehrzahl an Reibelementaufnahmen 19 aufweisen, in der die Reibelemente 18 insbesondere entlang der Vorspannachse Av beweglich, optional verschiebbar gelagert sind.

Erkennbar ist, dass die Reibelemente 18 bei dieser Ausführungsform optional zwischen ersten Teilkörpern 5 des ersten Körpers 4 bzw. Außenkörpers 7 eingeklemmt sind. Sie durchdringen dabei den zweiten Körpers 14 und insbesondere die Reibscheibe 16, wodurch eine Drehmomentenübertragung zwischen erstem Körper 4 und zweitem Körper 14 möglich wird.

Optional weißt der erste Körper 4 wenigstens zwei erste Teilkörper 5, insbesondere erste Ringelemente, und der zweite Körper 14 wenigstens einen zweiten Teilkörper 15, insbesondere ein zweites Ringelement auf, oder umgekehrt, welche insbesondere entlang der Vorspannachsen Av abwechselnd geschichtet und insbesondere in einer Mehrzahl an jeweils zur Vorspannachse orthogonal parallel zueinander verlaufenden Scheibenebene angeordnet sind.

Um eine im Wesentlichen spielfreie Drehmomentenübertragung zu erlauben, ist die Lagerung der Reibelemente 18 in den Reibelementaufnahmen 19 der Reibscheibe 16 bzw. des zweiten Teilkörpers 15 in einer Achse orthogonal zur Vorspannachse Av spielfrei ausgebildet. Optional sind die Reibelemente in den Reibelementaufnahmen so gelagert, dass eine Bewegung entlang einer Achse abweichen von der Vorspannachse im Wesentlichen Unterbunden wird. Die Reibelemente sitzen optional lediglich entlang der Vorspannachse Av beweglich, aber in anderer Richtung axial fixiert in den Reibelementaufnahmen. Es ist denkbar, die Reibelemente außer entlang der Vorspannachse Av spielfrei und/oder zwängungsfrei in den Reibelementaufnahmen 19 zu lagern. Auch ist es denkbar, die Reibelemente 18 um die Vorspannachse Av drehbar in den Reibelementaufnahmen 19 zu lagern.

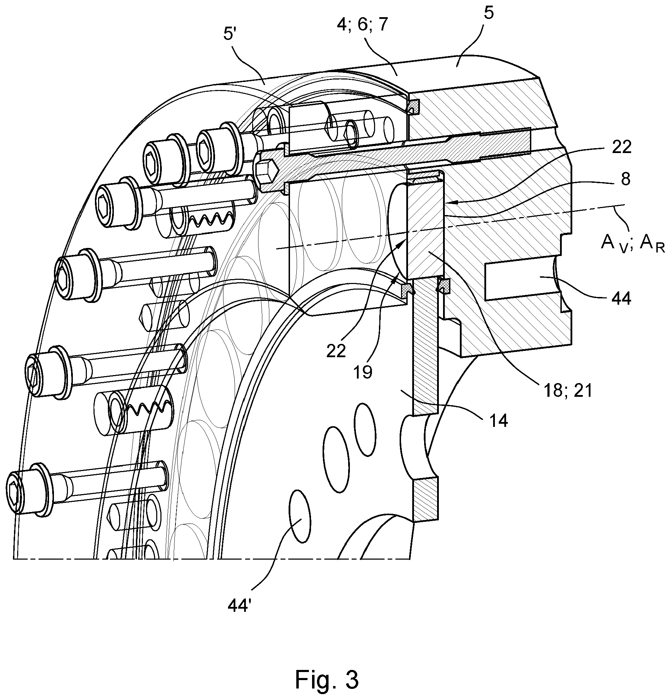

Wie insbesondere in Fig. 3 dargestellt, weist wenigstens ein Reibelement 18 einen Reibzylinder 21 oder ein dergleichen um eine Rotationsachse A_{R} rotationssymmetrisch ausgebildeten Reibkörper auf bzw. ist als ein solcher ausgebildet. Die Rotationsachse kann dabei optional parallel zur Vorspannachse Av verlaufen, entlang derer das Reibelement beweglich in der Reibelementaufnahme 19 gelagert ist. Bei dieser Ausführungsform sind die Reibelemente 18 als Reibzylinder ausgebildet, mit jeweils zwei gegenüberliegenden coplanaren Stirnseitenflächen 22. Mit diesen Stirnseitenflächen 22 stehen die jeweiligen Reibelemente 18 mit den Reibgegenelementen 8 am ersten Körper 4 in Reibschluss. Wie erwähnt, können diese Reibgegenelemente 8 Beschichtungen, Inlays, zusätzlich am Körper 4 angeordnete Bauteile aber auch unbehandelte oder behandelte Teilbereiche des ersten Körpers 4 sein.

Wie ebenfalls in Fig. 3 erkennbar, sind optional die Reibelemente 18 werkzeuglos in die jeweiligen Reibelementaufnahmen 19 einsetzbar und insbesondere austauschbar, wenn der zweite Körper nicht am ersten Körper verbaut ist. Ersichtlich ist auch, dass die Reibelemente im verbauten Zustand und im Zusammenspeile des ersten und zweiten Körpers optional durch den ersten Körper 4 in den Reibelementaufnahmen 19 gehalten werden.

Bei der in Fig. 3 dargestellten Ausführungsform weist der zweite Körper 14 optional eine Mehrzahl an Reibelementaufnahmen 19 auf, die den zweiten Körper 14 entlang einer Durchdringungsachse A_{D} (siehe Fig. 1) durchdringen. Die Reibelemente 18 sind entlang dieser Durchdringungsachse beweglich in den Reibelementaufnahmen 19 gelagert. Die Durchdringungsachse A_{D} kann parallel oder co-axial zur Vorspannachse Av und/oder zur Rotationsachse A_{R} und/oder zur Drehmomentenachse A_{M} verlaufen. Optional sind die Reibelementaufnahmen 19 als Bohrungen und insbesondere orthogonal in einer Scheibe oder in einem dergleichen Element, das der zweite Körper umfasst, ausgebildet.

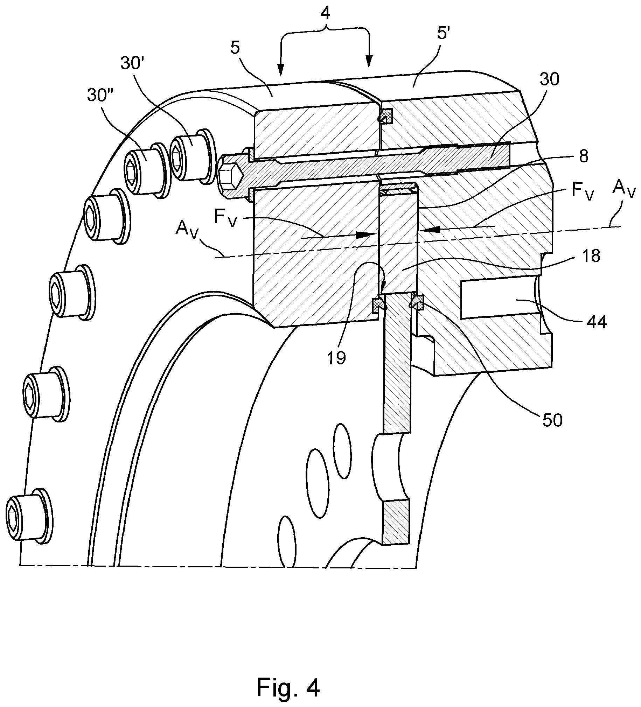

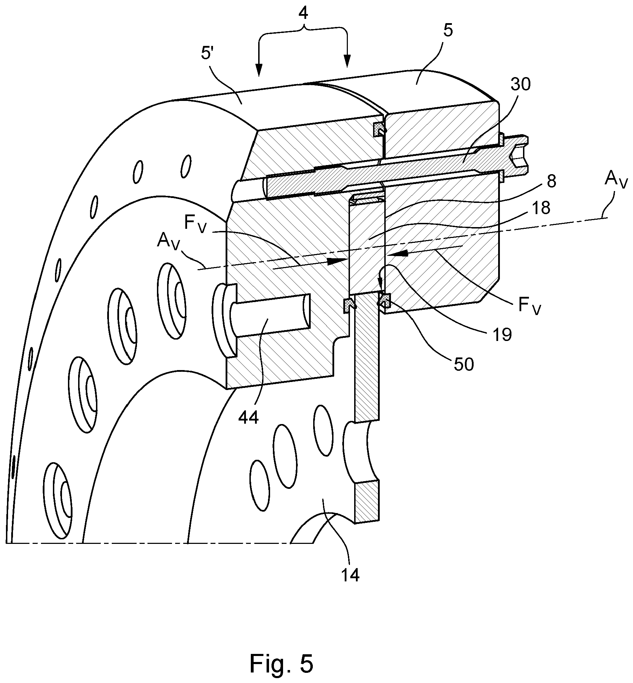

Insbesondere in den Figs. 4 und 5 wird deutlich, dass optional der erste Körper 4 und der zweite Körper 14 derart ausgebildet sind, dass die in den Reibelementaufnahmen 19 eingesetzten Reibelemente von den Reibgegenelementen 8 eingeklemmt werden. Das Resultat ist ein Reibschluss zwischen erstem Körper 4 und zweitem Körper 14, um das in Fig. 1 dargestellte Drehmoment M abzutragen. Wie in den Figs. 1-5 dargestellt, umfasst der erste Körper 4 optional wenigstens zwei erste Teilkörper 5, insbesondere erste Ringelemente, und der zweite Körper 14 wenigstens einen zweiten Teilkörper 15, insbesondere ein zweites Ringelement, oder umgekehrt. Diese Teilkörper 5, 15 sind optional insbesondere entlang der Vorspannachse Av und/oder Drehmomentenachse A_{M} und/oder Rotationsachse A_{R} abwechselnd geschichtet angeordnet. Beispielsweise folgt in axialer Richtung (zu wenigstens einer der zuvor genannten Achsen) auf einen ersten Teilkörper 5 des ersten Körpers 4 ein zweiter Teilkörper 15 des zweiten Körpers 5, gefolgt von einem weiteren ersten Teilkörper 5 des ersten Körpers 4.

In den Figs. 4 und 5 weiter dargestellt, ist eine Ausführungsform, bei der die Vorspannung eine Federvorspannung ist, aufgebracht durch wenigstens ein Vorspannmittel 30, und hier insbesondere eine elastische Schraube oder ein dergleichen Verbindungsmittel. Diese elastische Schraube ist derart ausgebildet, dass sie durch die auf die Reibelemente aufgebrachte Vorspannkraft Fv längselastisch gedehnt ist und so die Vorspannung entlang der Vorspannachse Av auf den ersten Körper 4 bzw. seine Teilkörper 5 und die Reibelemente 18 aufbringt.

Bei dieser Ausführungsform ist zudem optional das Vorspannmittel 30 derart angeordnet, dass wenigstens zwei Teilkörper 5 des einen Körpers 4 unter Pressung wenigstens einen Reibelements 18 am anderen Körper, hier dem zweiten Körper 14 gegeneinander vorgespannt sind.

Optional ist bei dieser Ausführungsform zwischen dem ersten Körper 4 und zweitem Körper 14 wenigstens ein Dichtungselement 50 angeordnet, das sich zwischen erstem Körper 4 und zweitem Körper 14 erstreckt (siehe Figs. 4 und 5). Dieses Dichtelement steht optional mit wenigstens einem Körper 4, 14 in Gleitverbindung. Es ist optional derart ausgebildet, dass es das Eindringen von Objekten von außerhalb der Überlastkupplung 1 in den Reibschlussbereich zwischen Reibgegenelementen 8 und Reibelementen 18 verhindert. Das Dichtungselement 50 kann optional so ausgebildet sein, dass es eine Vorspannkraft zwischen erstem Körper 4 und zweitem Körper 14 bewirkt und so die Lage des zweiten Körpers 14 relativ zum ersten Körper 4 elastisch definiert.

Es ist insbesondere in diesem Zusammenhang möglich, dass der erste Körper 4 und der zweite Körper 14 derart ausgebildet sind, dass im Vorspannzustand, wie beispielsweise in Fig. 4 dargestellt, wenigstens ein Teilkörper 15 des einen Körpers 14, in dem die Reibelementaufnahmen 19 ausgebildet sind, relativ zum anderen Körper 4 beweglich und insbesondere entlang der Vorspannachse Av und/oder der Rotationsachse A_{R} und/oder der Drehmomentenachse A_{M} verlagerbar und insbesondere verschiebbar ausgebildet ist. Aufgrund des hier optional elastisch ausgebildeten, vorhandenen Dichtungselements 50 ist diese Längsverschieblichkeit gewährleistet.

Wie insbesondere in Fig. 1 dargestellt, ist optional bei dieser Ausführungsform das Antriebsteil 2 optional mit dem ersten Körper 4 und das Abtriebsteil 12 optional mit dem zweiten Körper 14 verbunden. In Bezug auf die Drehmomentenachse kann dabei ein Verbindungsbereich zwischen dem Abtriebsteil 12 oder dem Antriebsteil 2 und dem zweiten Körper radial innerhalb eines Verbindungsbereichs des ersten Körpers mit dem entsprechenden Antriebsteil 2 bzw. Abtriebsteil 12 angeordnet sein. Bei dieser Ausführungsform liegt der Verbindungsbereich zwischen Abtriebsteil 12 und zweitem Körper 14 innerhalb des Verbindungsbereichs des Antriebsteils 2 mit dem äußeren Körper 4. Beide Verbindungsbereiche sind optional koaxial zueinander angeordnet. Dies gilt optional auch für die Rotationsachse A_{M}, die in beiden Teilen, insbesondere dem Antriebsteil 2 und dem Abtriebsteil 12 koaxial verläuft. Optional sind der erste Körper und der zweite Körper derart ausgebildet, dass aufgrund der Vorspannung die Reibelemente 18 am einen Körper 14 von den Reibgegenelemente 8 am anderen Körper 4, hier dem ersten Körper 4, eingeklemmt und optional bis zum Erreichen des Überlastmoments entlang wenigstens einer Achse in ihrer Lage fixiert werden.

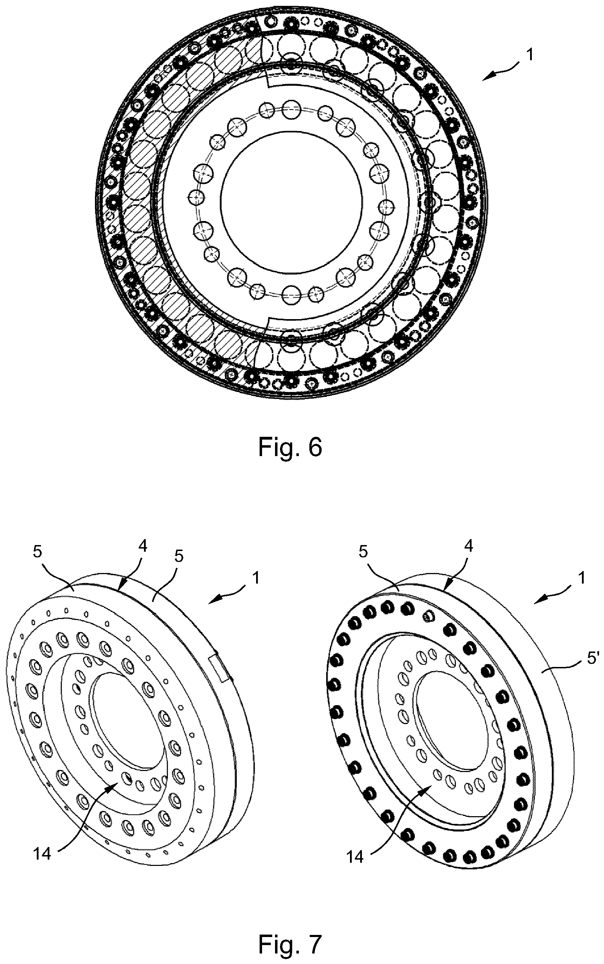

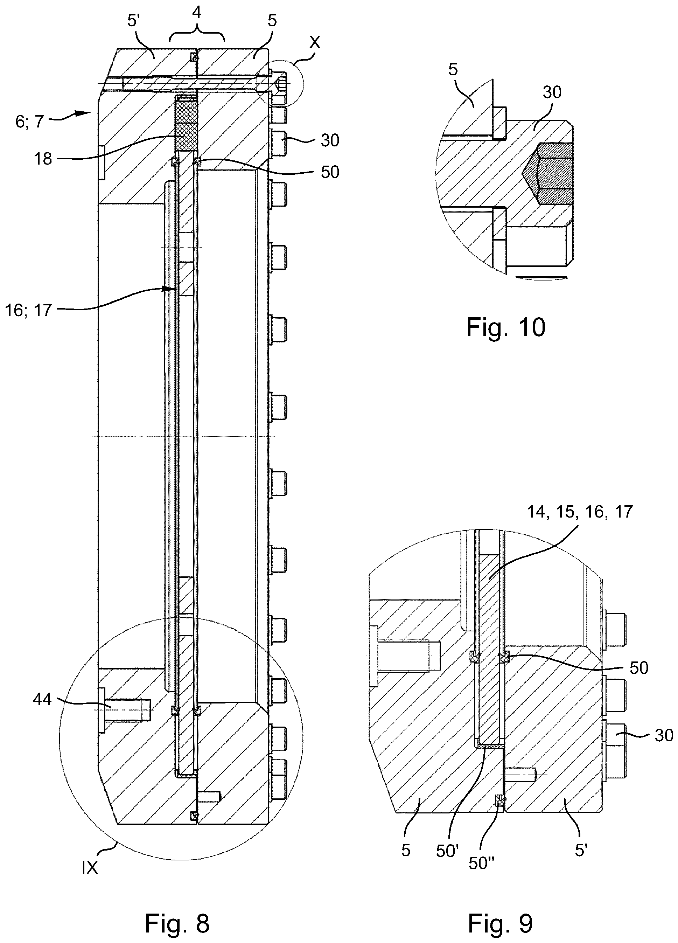

Die Figs. 6 bis 9 zeigen eine weitere Ausführungsform der erfindungsgemäßen Überlastkupplung, die in ihren Grundbestandteilen den zuvor beschrieben Ausführungsformen von Überlastkupplungen entspricht. Wenn nicht anderes erwähnt, gilt das zuvor Beschriebene auch für die hier dargestellte Ausführungsform. Dargestellt ist wieder ein erster Körper 4, der ebenfalls zweiteilig, umfassend zwei erste Teilkörper 5, ausgebildet ist und ein zweiter Körper 14, der hier wieder als Reibscheibe ausgebildet ist und Reibelemente 18 aufweist, die in Reibelementaufnahmen 19 des zweiten Körpers 14 gelagert sind.

Die beiden ersten Teilkörper 5 des ersten Körpers 4 sind wieder über elastische Vorspannmittel 30 bzw. elastische Schraubbolzen unter Einklemmen der Reibelemente 18 gegeneinander vorgespannt. Erneut ist es denkbar, den ersten Körper 4 als Sattel 6 bzw. Außenkörper 7 auszubilden. Dies gilt identisch für den zweiten Körper 14, der optional als Reibscheibe 16 bzw. Innenkörper 17 ausgebildet sein kann.

### Bezugszeichenliste

- 1: Überlastkupplung
- 2: Antriebsteil
- 3: Antriebswelle
- 4: erster Körper
- 5: erster Teilkörper
- 6: Sattel
- 7: Außenkörper
- 8: Reibgegenelement
- 12: Abtriebsteil
- 13: Antriebsstrang
- 14: zweiter Körper
- 15: zweiter Teilkörper
- 16: Reibscheibe
- 17: Innenkörper
- 18: Reibelement
- 19: Reibelementaufnahme
- 22: Stirnseitenfläche
- 30: Vorspannmittel
- 40: Verbindung
- 42: Flansch
- 43: Bolzen
- 44: Bolzenaufnahme
- A_{M}: Drehmomentenachse
- Av: Vorspannachse
- A_{R}: Rotationsachse
- Fv: Vorspannkraft

## Patentansprüche

1. Überlastkupplung, nämlich Rutschkupplung, zur Übertragung eines in der Höhe begrenzten, um eine Drehmomentenachse A_{M} wirkenden Drehmoments M, von einem Antriebsteil (2), beispielsweise einem Getriebe einer Antriebswelle (3) einer Windkraftanlage, auf ein axial nachgeschaltetes Abtriebsteil (12), beispielsweise einem Antriebsstrang (13) eines Generators, umfassend:
wenigstens einen drehmomentsteif entweder mit dem Antriebsteil (2) oder dem Abtriebsteil (12) verbundenen ersten Körper (4), und wenigstens einen entsprechend drehmomentsteif mit dem anderen Teil, also dem Abtriebsteil (12) bzw. dem Antriebsteil (2) verbundenen zweiten Körper (14), wobei
der zweite Körper (14) eine Mehrzahl an Reibelementen (18) umfasst, die, unter Bildung eines Reibschlusses zwischen dem erstem Körper (4) und dem zweiten Körper (14), gegen Reibgegenelemente (8) am ersten Körper (4) entlang wenigstens einer Vorspann achse A_{V} vorgespannt sind, wobei
die Reibelemente (18) entlang der Vorspannachse A_{V} beweglich in Reibelementaufnahmen (19) im zweiten Körper (14) gelagert, aufgrund der Vorspannung von den Reibgegenelementen eingeklemmt, und bis zum Erreichen des Überlastmomentes entlang wenigstens einer Achse in ihrer Lage fixiert sind,
**dadurch gekennzeichnet, dass**
der zweite Körper (14) eine Mehrzahl an Reibelementaufnahmen (19) aufweist, die den zweiten Körper (14) entlang einer Durchdringungsachse A_{D} durchdringen, wobei die Reibelemente (18) entlang dieser Durchdringungsachse beweglich in den Reibelementaufnahmen (19) gelagert sind.

2. Überlastkupplung nach Anspruch 1,
**dadurch gekennzeichnet, dass**
die Vorspannachse Av im Wesentlichen parallel zur Drehmomentenachse A_{M} verläuft.

3. Überlastkupplung nach Anspruch 1 oder 2,
**dadurch gekennzeichnet , dass**
die Reibelemente (18) um die Vorspannachse A_{V} drehbar in den Reibelementaufnahmen (19) gelagert sind.

4. Überlastkupplung nach einem der vorhergehenden Ansprüche,
**dadurch gekennzeichnet , dass**
der zweite Körper (14) einen Innenkörper (17) und der erste Körper (4) einen Außenkörper (7) aufweist, oder umgekehrt, wobei der Außenkörper (7) den Innenkörper (17) wenigstens teilweise umschließt.

5. Überlastkupplung nach einem der vorhergehenden Ansprüche,
**dadurch gekennzeichnet , dass**
der erste Körper (4) einen Sattel (6) umfasst, und/oder der zweite Körper (14) eine Reibscheibe (16) umfasst, wobei optional die Reibscheibe (16) eine Mehrzahl an Reibelementaufnahmen (19) aufweist, in der die Reibelemente (18) entlang der Vorspannachse A_{V} verschiebbar gelagert sind.

6. Überlastkupplung nach einem der vorhergehenden Ansprüche,
**dadurch gekennzeichnet; , dass**
der erste Körper (4) wenigstens zwei erste Teilkörper (5), und der zweite Körper (14) wenigstens einen zweiten Teilkörper (15)aufweist, oder umgekehrt.

7. Überlastkupplung nach Anspruch 6,
**dadurch gekennzeichnet , dass**
die wenigstens zwei ersten Teilkörper (5) erste Ringelemente sind, und der wenigstens eine zweite Teilkörper (15) ein zweites Ringelement ist.

8. Überlastkupplung nach einem der vorhergehenden Ansprüche 6 oder 7,
**dadurch gekennzeichnet , dass**
die ersten (5) und zweiten Teilkörper (15), entlang der Vorspannachsen A_{V} abwechselnd geschichtet angeordnet sind.

9. Überlastkupplung nach Anspruch 8,
**dadurch gekennzeichnet, dass**
die ersten (5) und zweiten Teilkörper (15) in einer Mehrzahl an jeweils zur Vorspannachse A_{V} orthogonal parallel zueinander verlaufenden Scheibenebenen angeordnet sind.

10. Überlastkupplung nach einem der vorhergehenden Ansprüche 6 bis 9,
**dadurch gekennzeichnet , dass**
der erste Körper (4) und der zweite Körper (14) derart ausgebildet sind, dass im Vorspannzustand wenigstens ein Teilkörper (15) des einen Körpers (14), in dem die Reibelementaufnahmen (19) ausgebildet sind, relativ zu wenigstens einem Teilkörper (5) des anderen Körpers (4) beweglich und wenigstens entlang der Vorspannachse Av verschiebbar ausgebildet ist.

11. Überlastkupplung nach einem der vorhergehenden Ansprüche,
**dadurch gekennzeichnet , dass**
wenigstens ein Vorspannmittel (30) vorgesehen ist, das wenigstens zwei Teilkörper (5) des ersten Körpers (4), unter Vorspannung wenigstens eines Reibelements (18) am zweiten Körper (14), oder umgekehrt, gegeneinander vorspannt.

12. Überlastkupplung nach einem der vorhergehenden Ansprüche,
**dadurch gekennzeichnet , dass**
wenigstens ein Vorspannmittel (30) vorgesehen ist, das zur Bildung des Reibschlusses zwischen dem erstem Körper (4) und dem zweiten Körper (14), die Reibelemente (18) am zweiten Körper (14) entlang der wenigstens einen Vorspannachse A_{V} gegen Reibgegenelemente (8) am ersten Körper (4) vorgespannt.

13. Überlastkupplung nacheinem der vorhergehenden Ansprüche,
**dadurch gekennzeichnet , dass**
wenigstens ein Reibelement (18) einen Reibzylinder (21) oder ein dergleichen, um eine Rotationsachse rotationssymmetrisch ausgebildeten Reibkörper aufweist.

14. Überlastkupplung nach einem der vorhergehenden Ansprüche,
**dadurch gekennzeichnet , dass**
die Reibelementaufnahmen (19) als Bohrungen in einer Scheibe oder einem dergleichen Element, das der zweite Körper (14) umfasst ausgebildet sind.

15. Überlastkupplung nach Anspruch 14,
**dadurch gekennzeichnet, dass**
die Bohrungen orthogonal in der Scheibe oder dem dergleichen Element ausgebildet sind.

## Claims

1. An overload clutch, more specifically a slip clutch, for transferring a torque M, active around a torque axis A_{M} and limited to a maximum value, from a driving part (2), for example a gear of a driving axis (3) of a wind power station, to an axially downstream positioned driven part (12), for example a powertrain (13) of a generator, comprising:
at least a first body (4), connected in a torque-resistant way with the driving part (2) or with the driven part (12), and at least a second body (14), correspondingly connected in a torque-resistant way with the other part, i.e. with the driven part (12) or with the driving part (2), respectively, whereby the second body (14) comprises multiple friction elements (18) which, forming a friction fit between the first body (4) and the second body (14), are pre-tensioned along at least a pre-tension axis A_{V} against friction elements (8) on the first body (4), whereby the friction elements (18) are movably mounted along the pre-tension axis Av in friction element recesses (19) in the second body (14), clamped by the friction counter elements by virtue of the pre-tension, the location of which along at least an axis is fixed until the overload torque is reached,
**characterised in that**
the second body (14) comprises multiple friction element recesses (19) that penetrate the second body (14) along a penetration axis A_{D}, whereby the friction elements (18) are movably mounted along this penetration axis in the friction element recesses (19).

2. Overload clutch according to claim 1,
**characterised in that**
the pre-tension axis A_{V} runs essentially parallel to the torque axis A_{M}.

3. Overload clutch according to claim 1 or 2,
**characterised in that**
the friction elements (18) are rotatably mounted around the pre-tension axis A_{V} in the friction element recesses (19).

4. Overload clutch according to any of the previous claims,
**characterised in that**
the second body (14) comprises an inner body (17), and the first body (4) comprises an outer body (7), or vice versa, whereby the outer body (7) at least partially encloses the inner body (17).

5. Overload clutch according to any of the previous claims,
**characterised in that**
the first body (4) comprises a saddle (6), and/or the second body (14) comprises a friction disc (16), whereby the friction disc (16) optionally comprises multiple friction element recesses (19) in which the friction elements (18) are slidably mounted along the pre-tension axis A_{V}.

6. Overload clutch according to any of the previous claims,
**characterised in that**
the first body (4) comprises at least two first partial bodies (5), whereas the second body (14) comprises at least a second partial body (15), or vice versa.

7. Overload clutch according to claim 6,
**characterised in that**
the at least two first partial bodies (5) are ring elements, and the at least second partial body (15) is a second ring element.

8. Overload clutch according to any of the previous claims 6 or 7,
**characterised in that**
the first (5) and second partial bodies (15) are arranged alternately in layers along the pre-tension axis Av.

9. Overload clutch according to claim 8,
**characterised in that**
the first (5) and second partial bodies (15) are arranged in multiple, mutually parallel disc plains that are perpendicular to the pre-tension axis Av.

10. Overload clutch according to any of the previous claims 6 to 9,
**characterised in that**
the first body (4) and the second body (14) are foreseen in such a way that in the pre-tensioned state at least a partial body (15) of the body (14) in which the friction element recesses (19) can be found, is relatively movable with respect to at least a partial body (5) of the other body (4), and is slidable, at least along the pre-tension axis Av.

11. Overload clutch according to any of the previous claims,
**characterised in that**
at least a bias means (30) is foreseen with which at least two partial bodies (5) of the first body (4) are pressed against each other, thereby creating a pre-tension of at least a friction element (18) against the second body (14), or vice versa.

12. Overload clutch according to any of the previous claims,
**characterised in that**
at least a bias means (30) is foreseen with which the friction elements (18) on the second body (14) are pressed against friction counter elements (8) on the first body (4) along the at least one pre-tension axis Av, with the aim of creating the friction fit between the first body (4) and the second body (14).

13. Overload clutch according to any of the previous claims,
**characterised in that**
at least one friction element (18) comprises a friction cylinder (21) or a similar friction body, formed rotation-symmetrically around a rotation axis.

14. Overload clutch according to any of the previous claims,
**characterised in that**
the friction element recesses (19) are foreseen as bores in a disc or in a similar element that comprises the second body (14).

15. Overload clutch according to claim 14,
**characterised in that**
the bores are formed perpendicularly in the disc or in the similar element.

## Revendications

1. Accouplement de surcharge, à savoir accouplement à friction, pour la transmission d'un couple de rotation M limité en hauteur, agissant autour d'un axe de couple de rotation A_{M}, d'une pièce d'entraînement (2), par exemple d'une transmission d'un arbre d'entraînement (3) d'une éolienne, sur une pièce de sortie (12) montée axialement en aval, par exemple une chaîne cinématique (13) d'un générateur, comprenant : au moins un premier corps (4) relié de manière rigide en termes de couple de rotation soit à la pièce d'entraînement (2) soit à la pièce de sortie (12), et au moins un deuxième corps (14) relié de manière correspondante de manière rigide en termes de couple de rotation à l'autre autre pièce, donc à la pièce de sortie (12) ou à la pièce d'entraînement (2), dans lequel le deuxième corps (14) comprend une multitude d'éléments de friction (18) qui, en formant une liaison par friction entre le premier corps (4) et le deuxième corps (14), sont précontraints contre des contre-éléments de friction (8) sur le premier corps (4) le long d'au moins un axe de précontrainte A_{V}, dans lequel les éléments de friction (18) sont montés de manière mobile le long de l'axe de précontrainte A_{V} dans des logements d'élément de friction (19) dans le deuxième corps (14), sont coincés par les contre-éléments de friction en raison de la précontrainte, et sont fixés dans leur position le long au moins d'un axe jusqu'à ce que le couple de surcharge soit atteint, **caractérisé en ce que** le deuxième corps (14) présente une multitude de logements d'élément de friction (19), qui traversent le deuxième corps (14) le long d'un axe de pénétration A_{D}, dans lequel les éléments de friction (18) sont montés de manière mobile le long dudit axe de pénétration dans les logements d'élément de friction (19).

2. Accouplement de surcharge selon la revendication 1, **caractérisé en ce que** l'axe de précontrainte A_{V} s'étend de manière sensiblement parallèle à l'axe de couple de rotation A_{M}.

3. Accouplement de surcharge selon la revendication 1 ou 2, **caractérisé en ce que** les éléments de friction (18) sont montés de manière à pouvoir tourner autour de l'axe de précontrainte A_{V} dans les logements d'élément de friction (19).

4. Accouplement de surcharge selon l'une quelconque des revendications précédentes, **caractérisé en ce que** le deuxième corps (14) présente un corps interne (17) et le premier corps (4) un corps externe (7), ou inversement, dans lequel le corps externe (7) entoure au moins en partie le corps interne (17).

5. Accouplement de surcharge selon l'une quelconque des revendications précédentes, **caractérisé en ce que** le premier corps (4) comprend une selle (6) et/ou le deuxième corps (14) comprend un disque de friction (16), dans lequel, en option, le disque de friction (16) présente une multitude de logements d'élément de friction (19), dans lesquels les éléments de friction (18) sont montés de manière à pouvoir coulisser le long de l'axe de précontrainte A_{V}.

6. Accouplement de surcharge selon l'une quelconque des revendications précédentes, **caractérisé en ce que** le premier corps (4) présente au moins deux premiers corps partiels (5), et le deuxième corps (14) au moins un deuxième corps partiel (15), ou inversement.

7. Accouplement de surcharge selon la revendication 6, **caractérisé en ce que** les au moins deux premiers corps partiels (5) sont des premiers éléments annulaires, et l'au moins un deuxième corps partiel (15) est un deuxième élément annulaire.

8. Accouplement de surcharge selon l'une quelconque des revendications 6 ou 7, **caractérisé en ce que** les premiers (5) et deuxième corps partiels (15) sont disposés alternativement en couches le long des axes de précontrainte A_{V}.

9. Accouplement de surcharge selon la revendication 8, **caractérisé en ce que** les premiers (5) et deuxième corps partiels (15) sont disposés dans une multitude de plans de disque s'étendant de manière orthogonalement parallèle respectivement par rapport à l'axe de précontrainte A_{V}.

10. Accouplement de surcharge selon l'une quelconque des revendications précédentes 6 à 9, **caractérisé en ce que** le premier corps (4) et le deuxième corps (14) sont réalisés de telle manière que, dans l'état de précontrainte, au moins un corps partiel (15) d'un corps (14), dans lequel les logements d'élément de friction (19) sont réalisés, est réalisé de manière mobile par rapport à au moins un corps partiel (5) de l'autre corps (4), et de manière à pouvoir coulisser au moins le long de l'axe de précontrainte A_{V}.

11. Accouplement de surcharge selon l'une quelconque des revendications précédentes, **caractérisé en ce qu'**est prévu au moins un moyen de précontrainte (30), qui précontraint l'un contre l'autre au moins deux corps partiels (5) du premier corps (4), moyennant une précontrainte d'au moins un élément de friction (18) sur le deuxième corps (14), ou inversement.

12. Accouplement de surcharge selon l'une quelconque des revendications précédentes, **caractérisé en ce qu'**est prévu au moins un moyen de précontrainte (30), qui précontraint les éléments de friction (18) sur le deuxième corps (14) le long de l'au moins un axe de précontrainte A_{V} contre des contre-éléments de friction (8) sur le premier corps (4) pour former la liaison par friction entre le premier corps (4) et le deuxième corps (14) .

13. Accouplement de surcharge selon l'une quelconque des revendications précédentes, **caractérisé en ce qu'**au moins un élément de friction (18) présente un cylindre de friction (21) ou un corps de friction similaire réalisé de manière symétrique en rotation autour d'un axe de rotation.

14. Accouplement de surcharge selon l'une quelconque des revendications précédentes, **caractérisé en ce que** les logements d'élément de friction (19) sont réalisés comme des alésages dans un disque ou un élément similaire, qui comprend le deuxième corps (14).

15. Accouplement de surcharge selon la revendication 14, **caractérisé en ce que** les alésages sont réalisés de manière orthogonale dans le disque ou dans l'élément similaire.
